# EUROPÄISCHE PATENTSCHRIFT

(11) **EP 0 701 773 B1**
(45) Veröffentlichungstag und Bekanntmachung des Hinweises auf die Patenterteilung: **07.11.2001**
(21) Anmeldenummer: 95114523.4
(22) Anmeldetag: 15.09.1995
(51) Int. Cl.: A01G 1/00, A01B 1/14

(54) **Gartengerät**
Gardening tool
Appareil de jardinage

(30) Priorität: 15.09.1994 DE 9414989 U
(43) Veröffentlichungstag der Anmeldung: 20.03.1996
(73) Patentinhaber: Krumm, Berthold, 79424 Auggen (DE)
(72) Erfinder: Krumm, Berthold, 79424 Auggen (DE)
(74) Vertreter: Goy, Wolfgang, Dipl.-Phys.

(56) Entgegenhaltungen:
- DE-C- 13 744
- DE-C- 21 789
- GB-A- 674 880
- US-A- 1 902 705
- US-A- 2 513 033
- US-A- 2 597 954
- US-A- 2 835 102

## Beschreibung

Die Erfindung betrifft ein Gartengerät zum Entfernen von Unkräutern, Wurzelfilz, Moos etc. in Rasenflächen sowie zum gleichzeitigen Belüften dieser Rasenflächen nach dem Oberbegriff des Anspruchs 1.

Anwendungsgebiet der Erfindung ist somit ein Gerät zum Entfernen von Unkräutern insbesondere in Rasenflächen sowie weiterhin zum Entfernen von Unkraut in entsprechend befallenen Nutzflächen. Gleichzeitig soll damit der Rasen belüftet werden.

Bei der Beseitigung von Unkräutern insbesondere in Rasenflächen (aber auch in anderen Nutzflächen) werden heutzutage verschiedene Mittel und Geräte eingesetzt. Insbesondere der Einsatz von chemischen Mitteln ist aufgrund der damit verbundenen Umweltbelastung abzulehnen. Darüber hinaus gibt es mechanische Gartenrechen, um aus dem Rasen einerseits das Unkraut herauszuholen und andererseits den Rasen zu belüften. Die bekannten Gartenrechen weisen zahnartige Zinken auf, die jedoch nicht so richtig funktionstüchtig und geeignet sind, um das Unkraut aus dem Rasen herauszuholen.

In der US-A-1 902 705 ist ein Gartengerät der eingangs angegebenen Art offenbart, welches aus einem plattenförmig ausgebildeten Gerätekörper ausgeschnittene Zähne aufweist. Diese Zähne weisen ausgehend von der Basis am Gerätekörper bis hin etwa zur Mitte eine leicht abnehmende Breite auf und verjüngen sich etwa ab der Mitte hin zum Vorderende zu einer Art Spitze, welche jedoch abgeflacht ist. Der mittlere Bereich der Seitenkontur der Zähne ist dabei eckig ausgebildet. - Der Nachteil dieses Gartengerätes besteht darin, daß die Zähne sehr breit ausgebildet sind. Das Gartengerät ist somit für Nutzflächen zur Unkrautentfernung geeignet, nicht jedoch für Rasenflächen, weil dort aufgrund der Breite der Zähne der Rasen übermäßig beschädigt würde, indem nicht nur das Unkraut herausgerissen wird, sondern auch einzelne Rasenbüschel. Ein schonendes Entfernen von Unkraut in gepflegten Rasenflächen ist somit mit diesem bekannten Gartengerät nicht möglich.

Davon ausgehend liegt der Erfindung die **Aufgabe** zugrunde, das Rasenbearbeitungsgerät der eingangs angegebenen Art derart weiterzuentwickeln, daß der Rasen beim Entfernen der Unkräuter, Wurzelfilz, Moos etc. geschont und dabei gleichzeitig belüftet wird.

Die technische **Lösung** ist gekennzeichnet durch die Merkmale im Kennzeichen des Anspruchs 1.

Dadurch ist ein Rasenbearbeitungsgerät geschaffen, welches auf einfache und wirkungsvolle Weise Unkräuter, Wurzelfilz, Moos etc. aus Rasenflächen oder Nutzflächen herausholt und dabei gleichzeitig den Rasen belüftet. Das Gerät zeichnet sich durch eine einfache Handhabung aus, und durch seine geringe Größe und Leichtigkeit erlaubt das Gerät ein kräfteschonendes Arbeiten. Schließlich ist das Gerät preiswert und einfach in der Herstellung. Das Grundprinzip besteht dabei darin, daß durch die parallele oder leicht konische Ausbildung des lichten Zwischenabstandes zwischen zwei benachbarten Zähnen im Bereich des hinteren Abschnittes der Zähne das Unkraut festgeklemmt wird und damit ohne weiteres aus dem Rasen herausgeholt werden kann. Die konische bzw. trichterförmige Ausbildung des lichten Zwischenabstandes zwischen zwei benachbarten Zähnen stößt dann auf ihre Bemessungsgrenzen, wenn keine Klemmwirkung in diesem Bereich mehr erzielt wird, d. h. divergiert der Zwischenabstand hin zur Spitze zu stark, werden die dazwischen befindlichen Kräuter nicht mehr festgeklemmt und rutschen während des Bearbeitungsvorganges heraus. Die Seitenkontur der Zähne ist ausgehend von der Basis bis hin zur Spitze stetig, d. h. ohne Ecken. Insbesondere ist der Übergangsbereich in der Mitte der Zähne bezüglich ihrer Längserstreckung leicht abgerundet. Erfindungsgemäß ist der Gerätekörper plattenförmig ausgebildet, was gleichermaßen bedeutet, daß die Zähne ebenfalls plattenförmig ausgebildet sind, indem die Ober- und Unterseite zueinander planparallel sind, während die Zahnseitenflächen ebenfalls vorzugsweise eben sind. Dies kann technisch sehr einfach dadurch hergestellt werden, indem aus einer großflächigen Platte die entsprechenden Zähne ausgeschnitten werden. Während Zahnbreiten über 5 mm einen zu starken Widerstand beim Eindringen in den Rasen erbringen, liegt die optimale Breite der Zähne erfindungsgemäß ungefähr bei 4 mm. Beträgt weiterhin der lichte Abstand zwischen den Zähnen im Bereich der Basis des Gerätekörpers mehr als 4 mm, findet keine Einzwingung des Unkrauts mehr statt und es rutscht zwischen den Zähnen heraus. Bei zu geringem Abstand wird der Rasen zu stark beschädigt. Der optimale Zahnabstand liegt daher erfindungsgemäß ungefähr bei 3 mm. Je geringer weiterhin die Zahnspitzenabstände sind, desto mehr wird auch die Rasenwurzel in Mitleidenschaft gezogen. Hier beträgt erfindungsgemäß der optimale Zahnspitzenabstand ungefähr 7 mm. Bei einer Zahnlänge, welche zwischen 35 und 50 mm liegt, resultiert ein schwierigeres Abstreifen des Unkrauts aus den Zähnen, als bei den optimalen 35 mm. Darüber hinaus wird auch der Ballen bei zu großen Längen zu groß, den die ausgerissenen Unkräuter auf der Ober- und Unterseite des Gerätes bilden, so daß dann ein sauberes Arbeiten nicht mehr möglich ist. Schließlich besteht der Gerätekörper einschließlich der Zähne aus gehärtetem Stahl. Die bevorzugte Dicke beträgt dabei 2 bis 2,5 mm. Ist die Platte dicker, wird die Klemmwirkung zu stark. Bei einer dünneren Platte werden die ausgeschnittenen Zähne instabil. Da die Zähne des Gerätes jedoch einer Beanspruchung unterliegen, müssen sie demgemäß auch eine gewisse Stabilität aufweisen. Da die Stärke der Stahlplatte somit nicht stärker als 2,5 mm sein sollte, ist es nicht ratsam, die Zahnstärke ausgehend von der Mitte unterhalb von 3,5 mm zu schmälern. Um nämlich wieder auf den optimalen Zahnspitzenabstand von 7 mm zu kommen, muß der Zwischenabstand zwischen den Zähnen ebenfalls 3,5 mm betragen, was jedoch schon wieder den Klemmeffekt verringert.

Vorteilhafte Weiterbildungen ergeben sich aus den Unteransprüchen.

Eine bevorzugte Weiterbildung schlägt vor, daß die Höhe des Gerätekörpers einschließlich der Zähne 65 bis 80 mm beträgt. Dies ist die Höhe von handelsüblichen Gartenhacken.

Eine weitere Weiterbildung des erfindungsgemäßen Gartengerätes schlägt vor, daß die Breite des Gerätekörpers 75 bis 200 mm, insbesondere 120 bis 140 mm beträgt. Das Gerät läßt sich am besten in einer Breite zwischen 120 und 140 mm handhaben. Ab 140 mm ist die Wendigkeit nicht mehr so gut.

Eine Weiterbildung der Zähne schlägt vor, daß diese insbesondere auf der Rückseite einen Klingenschliff aufweisen. Dies bringt den Vorteil mit sich, daß die Zähne einfacher in den Rasen hineingebracht werden können.

Um eine gute ergonomische Handhabung zu gewährleisten, schließt der plattenförmige Gerätekörper bezüglich der Stielachse vorzugsweise einen Winkel von ungefähr 60° ein.

Eine Weiterbildung des erfindungsgemäßen Gartengerätes schlägt weiterhin vor, daß am Gerätekörper ein zweiter Gerätekörper angeordnet ist, der mit seinen Zähnen entgegengesetzt zur Ausrichtung der Zähne des ersten Gerätekörpers ausgerichtet ist. Dieser zweite Gerätekörper mit den zusätzlichen Zähnen ermöglicht, auf einfache Weise gezielt Unkraut aus dem Rasen entfernen zu können. Das Gerät wird mit Hilfe des Stiels umgedreht, so daß der zweite Gerätekörper mit seinen entsprechenden Zähen auf den Boden aufgesetzt werden kann. Dabei wird das Gerät hinter dem zu beseitigenden Unkraut aufgesetzt. Sodann sticht man unter leichtem Druck die Zähne in das Erdreich ein. Beim Anheben des Stiels verfängt sich die Wurzel oder der Stengel des tief wurzelnden Unkrauts in den Zähnen und kann somit mühelos mit der Wurzel herausgezogen werden. Vom Grundprinzip her sind dabei die Zähne des zweiten Gerätekörpers gleich ausgebildet wie die Zähne des ersten Gerätekörpers. Dies bedeutet, daß zum Festklemmen des Unkrauts die eine Hälfte der Zwischenabstände zwischen den Zähnen entweder parallel oder leicht konisch verläuft, während der vordere Bereich auseinanderläuft.

Vorzugsweise weist der zweite Gerätekörper dabei zwei bis fünf Zähne, insbesondere drei Zähne auf. Diese Anzahl der Zähne des oberen Bearbeitungsteils unterscheidet sich somit im Hinblick auf eine bessere Handhabung für die Beseitigung von Unkraut deutlich von dem anderen Bearbeitungsteil, welcher beispielsweise 15 Zähne besitzt.

Eine weitere Weiterbildung dieses zweiten Gerätekörpers schlägt vor, daß der Abstand zwischen den Spitzen des Zähne des zweiten Gerätekörpers 7,5 bis 12,5 mm, insbesondere ungefähr 10 mm beträgt. Der durchschnittliche Abstand zwischen den Zähnen des oberen Bearbeitungsteils ist somit größer als der durchschnittliche Abstand zwischen den "normalen" Zähnen.

Eine weitere Weiterbildung dieser Ausführungsform schlägt vor, daß der Abstand zwischen den Zähnen etwa in der Mitte 2,5 bis 3,5 mm, insbesondere ungefähr 3 mm beträgt.

Weiterhin schlägt eine Weiterbildung dieser zweiten Ausführungsform vor, daß die Zähne des zweiten Gerätekörpers eine Länge von 20 bis 50 mm, insbesondere ungefähr 35 mm aufweisen. Dabei weisen die Spitzen der Zähne vorzugsweise ebenso wie die anderen Zähne auf der Rückseite ebenfalls einen Klingenschliff auf, so daß das zweite Bearbeitungsteil entsprechend leicht in den Rasen eingebracht werden kann.

Schließlich wird in einer Weiterbildung vorgeschlagen, daß die Ebenen der beiden plattenförmigen Gerätekörper einen stumpfen Winkel von ungefähr 120° miteinander ein-schließen. Durch einfaches Drehen des Stiels können somit beide Bearbeitungsteile in gleich guter ergonomischer Weise gehandhabt werden.

Zwei Ausführungsbeispiele eines erfindungsgemäßen Gartengerätes werden nachfolgend anhand der Zeichnungen beschrieben. In diesen zeigt:
- Fig. 1: Eine Vorderansicht des Gerätekörpers einer ersten Ausführungsform des Gartengerätes;
- Fig. 2: eine Seitenansicht des Gartengerätes in Fig. 1;
- Fig. 3: eine Ansicht entsprechend der in Fig. 1 einer zweiten Ausführungsform;
- Fig. 4: eine entsprechende Darstellung dieser zweiten Ausführungsform wie in Fig. 2 der ersten Ausführungsform.

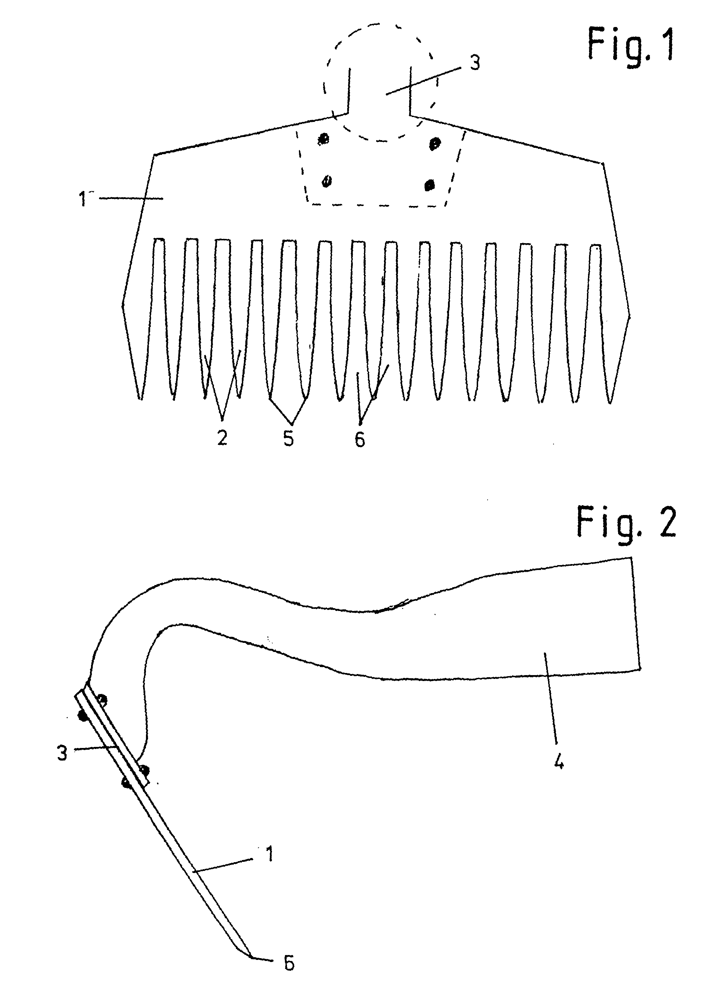

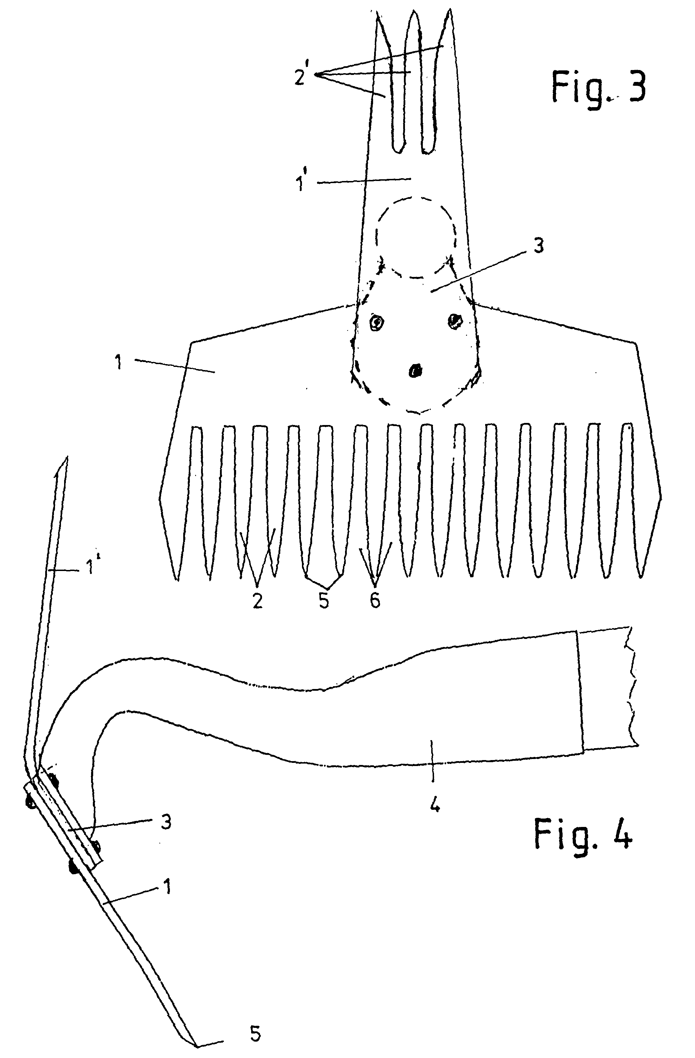

In den Fig. 1 und 2 ist eine erste Ausführungsform und in den Fig. 3 und 4 eine zweite Ausführungsform eines Gartengerätes dargestellt.

Die erste Ausführungsform des Gartengerätes, wie sie in den Fig. 1 und 2 dargestellt ist, weist einen plattenförmigen Gerätekörper 1 auf, aus dem in der dargestellten Weise Zähne 2 ausgeschnitten sind. Die Dicke der Platte beträgt dabei ungefähr 2,5 mm. Der Gerätekörper 1 ist mit einer Befestigungsvorrichtung 3 für einen Stiel 4 ausgestattet.

Das Besondere an diesem Gartengerät ist die spezielle Ausbildung der Zähne 2. Ausgehend von dem Punkt, wo sie am eigentlichen Gerätekörper 1 angeordnet sind, bis etwa zur Mitte der Längserstreckung der Zähne 2 verlaufen die Seitenwände eines jeden Zahnes 2 im wesentlichen parallel zueinander oder zur Spitze 5 hin ganz leicht konisch, so daß die Ausnehmung 6 zwischen zwei einander benachbarten Zähnen 2 leicht trichterförmig ist. Ab etwa der Mitte der Zähne 2 bis hin zur Spitze 5 verjüngt sich die Breite der Zähne 2 und mündet in der besagten Spitze 5. Es handelt sich dabei um eine stetige und abgerundete Kontur.

Die Arbeitsweise dieses Gartengerätes der ersten Ausführungsform ist wie folgt:

Zum Entfernen von Unkraut in einem Rasen wird das kammähnliche Gerät mit Hilfe des Stiels 4 flach auf den Rasen aufgesetzt, so daß die Ausnehmungen 6 zwischen den Zähnen 2 zur arbeitenden Person zeigen. Mit Hilfe des Stiels 4 wird sodann das Gerät in einem Winkel, der durch die Anordnung der Stielachse zum Gerätekörper 1 zwangsläufig gegeben ist, in den Rasen eingeführt und anschließend mit kurzen, ziehenden und heraushebenden Bewegungen geführt. Die Form, Zwischenräume sowie Tiefe der Zähne 2 bewirken, daß beim Durchgleiten des Rasens mit dem Gerät sich die Unkräuter sowie die Grashalme verfangen und durch den weiteren Zug des Gerätes in die Ausnehmungen 6 zwischen den Zähnen 2 verdichten bzw. eingezwängt werden. Sind die Ausnehmungen gefüllt, wird das Gerät mit Hilfe des Stiels 4 mühelos aus dem Rasen herausgehoben mit dem Ergebnis, daß die Unkräuter mit den Wurzeln herausgerissen werden, jedoch die glatten Grashalme unbeschädigt durch die Zähne 2 zurückgleiten.

Zum Entfernen der im Gerät verbleibenden Unkräuter wird das Gerät mit den mit Unkraut gefüllten Zwischenräumen der Zähne 2 ebenfalls wieder flach auf den Boden gesetzt. Anschließend wird mit Hilfes des Stiels 4 eine vom Körper weggehende Bewegung mit dem Ergebnis durchgeführt, daß das in den Ausnehmungen 6 zwischen den Zähnen 2 befindliche Unkraut mühelos abgestreift wird.

Beim beschriebenen Entfernen des Unkrauts wird der Rasen praktisch "gekämmt", d. h. er ist nicht mehr verfilzt und beim nachfolgenden Arbeitsgang nicht mehr verletzbar, bei dem mit Hilfe des Stiels der Gerätekörper 1 in steilerem Winkel zum Boden in den Rasen eingesetzt wird. Mit leichtem Druck wird das Gerät durch den Rasen gezogen, wobei die Zähne 2 durch Aufkratzen des Erdreichs den Wurzelfilz sowie das Moos entfernen und insgesamt eine Belüftung des Rasens herbeiführen. Im Ergebnis wird somit der Rasen geschont und gleichzeitig belüftet.

In stark verkrauteten älteren Rasenflächen und Nutzflächen finden sich auch stark gewachsene, hartnäckige sowie tiefwurzelnde Unkräuter, die auch durch "Kämmen" oder Belüften des Rasens nicht ohne weiteres entfernt werden können. In diesem Fall wird hinter dem zu entfernenden Unkraut mit Hilfe des Stiels 4 der Gerätekörper 1 auf die linke oder rechte untere Außenkante auf dem Boden aufgesetzt. Sodann sticht man unter leichtem Druck die Kante des Gerätes in das Erdreich ein. Beim Anheben des Stiels 4 verfängt sich die Wurzel oder der Stengel des Unkrauts in den äußeren Ausnehmungen 6, wobei zu diesem Zweck die äußersten beiden Zähne 2 verstärkt sind. Somit kann mühelos das Unkraut mit der Wurzel herausgezogen werden.

Nachfolgend soll das Gartengerät noch anhand unterschiedlicher Maße mit seinen Vor- und Nachteilen beschrieben werden.

Die Ausnehmung 6 möge im mittleren Bereich eine Breite von 4 mm aufweisen, und der Abstand der Spitzen 5 einander benachbarter Zähne 2 möge 7 mm betragen. Das Ergebnis ist dabei nicht befriedigend. Für den eigentlichen Zweck des Gerätes, nämlich die Unkrautentfernung, sind die Ausnehmungen 6 mit 4 mm zu breit. Es findet keine Einzwängung des Unkrauts statt, d. h. Unkraut und Gras rutschen durch. Der Zahnspitzenabstand von 7 mm ist aber speziell zum Belüften des Rasens geeignet.

Die Ausnehmungen 6 mögen im mittleren Bereich eine Breite von 2 mm besitzen, während der Abstand benachbarter Spitzen 5 5 mm betragen möge, so daß die Zähne 2 im mittleren Bereich eine Breite von ungefähr 3 mm aufweisen. Das Ergebnis hier ist noch zufriedenstellend. Da die Spitzen 5 der Zähne 2 gebunden an den Maßen der Ausnehmungen 6 sowie der Zähne 2 nur 5 mm voneinander entfernt sind, verursacht das Gerät beim Eindringen in den Rasen einen zu starken Widerstand, besonders bei dichtem Rasen. Der Rasen wird schon beim Einstechen beschädigt. Sind die Ausnehmungen mit Grashalmen und Unkraut verfüllt, so wird der Rasen beim Herausziehen des Gerätes teilweise ebenfalls mit den Wurzeln herausgerissen. Das Entfernen der herausgerissenen Unkräuter durch Abstreifen erfordert durch die zu große Verdichtung in den Ausnehmungen 6 zu viel Kraft.

In einer weiteren Ausführungsform möge die Breite der Ausnehmungen 6 im mittleren Bereich 2,5 mm betragen. Der Spitzenabstand möge 6,5 mm betragen, so daß im mittleren Bereich die Zähne 2 eine Breite von 4 mm aufweisen. Das Ergebnis ist sehr gut. Der Zahnspitzenabstand beträgt hier 6,5 mm. Diese Anordnung der Zähne 2 läßt zwar ein müheloses Eindringen in den Rasen zu, jedoch verklemmen sich die eingezwängten Unkräuter beim Entfernen derselben aus dem Gerät.

Eine vierte Ausführungsform möge Ausnehmungen 6 mit einer Breite von 3 mm und einen Spitzenabstand von 6,5 mm aufweisen, so daß die Zähne 2 im mittleren Bereich ungefähr eine Breite von 3,5 mm aufweisen. Auch hier ist das Ergebnis sehr gut. Diese Anordnung erlaubt ein müheloses Arbeiten. Jedoch ist der engere Zahnspitzenabstand von 6,5 mm zu dem Optimalabstand von 7 mm etwas von Nachteil. Der Grund liegt darin, daß beim Arbeiten mit dem Gerät ein gleichzeitiges Entfernen des Wurzelfilzes, der auf dem Boden aufliegt, stattfindet. Der Rasen wird dabei gleichzeitig belüftet, d. h. der Boden wird aufgekrazt. Je enger die Zahnspitzenabstände sind, desto mehr wird auch die Rasenwurzel in Mitleidenschaft gezogen.

Schließlich möge die Ausnehmung 6 eine Breite von 3 mm im mittleren Bereich besitzen, während der Abstand der Spitzen 5 7 mm betrage. Somit besitzen die Zähne 2 im mittleren Bereich eine Breite von ungefähr 4 mm. Diese Anordnung ist optimal mit einem sehr guten Ergebnis. Das Eindringen des Gerätes vollzieht sich mühelos. Ein gründliches Entfernen des Unkrauts mit den Wurzeln unter erstaunlicher Schonung des Rasens ist gewährleistet. Beim einhergehenden Aufkratzen des Rasenbodens werden die aktiven Rasenwurzeln durch den optimalen Zahnabstand von 7 mm geschont.

Die zweite Ausführungsform des Gartengerätes, wie es in den Fig. 3 und 4 beschrieben ist, unterscheidet sich von der ersten Ausführungsform in Fig. 1 und 2 lediglich dadurch, daß ein zusätzliches Bearbeitungsteil vorgesehen ist. In diesem Sinne ist ein zweiter Gerätekörper 1' am Stiel 4 befestigt, wobei die Zähne 2' dieses zweiten Gerätekörpers 1' entgegengesetzt zur Richtung der Zähne 2 des ersten Gerätekörpers 1 ausgerichtet sind und daher nach oben zeigen. Statt der 15 Zähne 2 weist dieser zweite Gerätekörper 1' auch nur lediglich drei Zähne 2' auf, wobei der Spitzenabstand zwischen benachbarten Zähnen 2' ungefähr 10 mm beträgt.

Dieses zusätzliche Bearbeitungsteil dient zum Entfernen speziell von Unkraut. Soll derartiges Unkraut entfernt werden, wird das gesamte Geräte mit Hilfe des Stiels 4 umgedreht, so daß der Gerätekörper 1' mit seinen Zähen 2' auf dem Boden aufgesetzt werden kann. Das Gerät wird dabei hinter dem zu entfernenden Unkraut aufgesetzt. Sodann sticht man unter leichtem Druck die drei Zähne 2' in das Erdreich ein. Beim Anheben des Stiels 4 verfängt sich die Wurzel oder der Stengel des tief wurzelnden Unkrauts in den Zähnen 2 und kann somit mühelos zusammen mit der Wurzel herausgezogen werden.

### Bezugszeichenliste

- 1,1': Gerätekörper
- 2, 2': Zahn
- 3: Befestigungsvorrichtung
- 4: Stiel
- 5: Spitze
- 6: Ausnehmung

## Patentansprüche

1. Gartengerät zum Entfernen von Unkräutern, Wurzelfilz, Moos etc. in Rasenflächen sowie zum gleichzeitigen Belüften dieser Rasenflächen,
mit einem an einem Stiel (4) angeordneten, plattenförmig ausgebildeten Gerätekörper (1), der an seiner Unterseite nebeneinanderliegende Zähne (2) aufweist,
wobei die Zähne (2) ausgehend von der Basis am Gerätekörper (1) bis hin etwa zur Mitte eine konstante Breite oder aber eine leicht abnehmende Breite aufweisen und
wobei sich die Breite der Zähne (2) etwa ab der Mitte verringert und sich am Vorderende des Zahns (2) zu einer Spitze (5) verjüngt,
**dadurch gekennzeichnet,**
**daß** die Seitenkontur der Zähne (2) ausgehend von der Basis bis hin zur Spitze (5) stetig ohne Ecken sowie im Übergangsbereich in der Mitte abgerundet ist,
**daß** die Breite der Zähne (2) im Bereich der Basis des Gerätekörpers (1) bis hin etwa zur Mitte 3,5 bis 4,5 mm beträgt,
**daß** der lichte Abstand zwischen den Zähnen (2) im Bereich der Basis des Gerätekörpers (1) bis hin etwa zur Mitte 2,5 bis 3,5 mm beträgt,
**daß** der Abstand zwischen den Spitzen (5) der Zähne (2) 6 bis 8 mm beträgt,
**daß** die Länge der Zähne (2) 20 bis 50 mm, insbesondere ungefähr 35 mm beträgt und
**daß** die Dicke des plattenförmigen Gerätekörpers (1) sowie der Zähne (2) weniger als 3 mm, insbesondere 2 bis 2,5 mm beträgt.

2. Gartengerät nach dem vorhergehenden Anspruch,
**dadurch gekennzeichnet,**
**daß** die Höhe des Gerätekörpers (1) einschließlich der Zähne (2) 65 bis 80 mm beträgt.

3. Gartengerät nach einem der vorhergehenden Ansprüche,
**dadurch gekennzeichnet,**
**daß** die Breite des Gerätekörpers (1) 75 bis 200 mm, insbesondere 120 bis 140 mm beträgt.

4. Gartengerät nach einem der vorhergehenden Ansprüche,
**dadurch gekennzeichnet,**
**daß** die Zähne (2) insbesondere auf der Rückseite einen Klingenschliff aufweisen.

5. Gartengerät nach einem der vorhergehenden Ansprüche,
**dadurch gekennzeichnet,**
**daß** der plattenförmige Gerätekörper (1) bezüglich der Stielachse einen Winkel von ungefähr 60° einschließt.

6. Gartengerät nach einem der vorhergehenden Ansprüche,
**dadurch gekennzeichnet,**
**daß** am Gerätekörper (1) ein zweiter Gerätekörper (1') angeordnet ist, der mit seinen Zähnen (2') entgegengesetzt zur Ausrichtung der Zähne (2) des ersten Gerätekörpers (1) ausgerichtet ist.

7. Gartengerät nach Anspruch 6,
**dadurch gekennzeichnet,**
**daß** der zweite Gerätekörper (1') zwei bis fünf Zähne (2'), insbesondere drei Zähne (2') aufweist.

8. Gartengerät nach Anspruch 6 oder 7,
**dadurch gekennzeichnet,**
**daß** der Abstand zwischen den Spitzen (5) der Zähne (2) des zweiten Gerätekörpers (1') 7,5 bis 12,5 mm, insbesondere ungefähr 10 mm beträgt.

9. Gartengerät nach einem der Ansprüche 6 bis 8,
**dadurch gekennzeichnet,**
**daß** der Abstand zwischen den Zähnen (2') etwa in der Mitte 2,5 bis 3,5 mm, insbesondere ungefähr 3 mm beträgt.

10. Gartengerät nach einem der Ansprüche 6 bis 9,
**dadurch gekennzeichnet,**
**daß** die Zähne (2') des zweiten Gerätekörpers (1') eine Länge von 20 bis 50 mm, insbesondere ungefähr 35 mm aufweisen.

11. Gartengerät nach einem der Ansprüche 6 bis 10,
**dadurch gekennzeichnet,**
**daß** die Ebenen der beiden plattenförmigen Gerätekörper (1, 1') einen stumpfen Winkel von ungefähr 120° miteinander einschließen.

## Claims

1. Gardening device for removal of weeds, root felt, moss etc. in lawns and simultaneous aeration of these lawns, with a platform-like device body (1) arranged on a handle (4) and having on its underside adjacent teeth (2),
where the teeth (2), starting from the base on the device body (1) up to approximately the centre, have a constant or slightly decreasing width and where the width of the teeth (2) diminishes from approximately the centre and tapers into a tip (5) at the leading end of the tooth (2),
**characterised in that**
the side contour of the teeth (2), starting from the base up to the tip (5), is continuous without corners and is rounded in the middle in the transition area,
that the width of the teeth (2) in the area of the base of the body (1) up to approximately the centre is 3.5 to 4.5 mm,
that the clear distance between the teeth (2) in the area of the base of the device body (1) up to approximately the centre is 2.5 to 3.5 mm,
that the distance between the tips (5) of the teeth (2) is 6 to 8 mm,
that the length of the teeth (2) is 20 to 50 mm, in particular around 35 mm, and the thickness of the platform device body (1) and the teeth (2) is less than 3 mm, in particular 2 to 2.5 mm.

2. Gardening device according to the preceding claim,
**characterised in that**
the height of the device body (1) including the teeth (2) is 65 to 80 mm.

3. Gardening device according to any of the preceding claims,
**characterised in that**
the width of the device body (1) is 75 to 200 mm, in particular 120 to 140 mm.

4. Gardening device according to any of the preceding claims,
**characterised in that** the teeth (2)
in particular on the back are ground into a blade section.

5. Gardening device according to any of the preceding claims,
**characterised in that**
the platform device body (1) in relation to the handle axis encloses an angle of around 60°.

6. Gardening device according to any of the preceding claims,
**characterised that**
arranged on the device body (1) is a second device body (1') which with its teeth (2') is aligned opposite the alignment of the teeth (2) of the first device body (1).

7. Gardening device according to claim 6,
**characterised in that**
the second device body (1') has two to five teeth (2'), in particular three teeth (2').

8. Gardening device according to claim 6 or 7,
**characterised in that**
the distance between the tips (5) of the teeth (2) of the second device body (1') is 7.5 to 12.5 mm, in particular approximately 10 mm.

9. Gardening device according to any of claims 6 to 8,
**characterised in that**
the distance between the teeth (2') in the centre is approximately 2.5 to 3.5 mm, in particular approximately 3 mm.

10. Gardening device according to any of claims 6 to 9,
**characterised in that**
the teeth (2') of the second device body (1') have a length of 20 to 50 mm, in particular approximately 35 mm.

11. Gardening device according to any of claims 6 to 10,
**characterised in that**
the planes of the two platform device bodies (1, 1') enclose with each other an oblique angle of approximately 120°.

## Revendications

1. Appareil de jardinage pour la suppression de mauvaises herbes, de racines, de mousse, etc.. sur des surfaces en gazon ainsi que pour l'aération simultanée de ces surfaces en gazon, muni d'un corps d'appareil (1) placé sur un manche (4) et formé en forme de plaque, qui présente des dents (2) placées les unes à côté des autres sur son côté inférieur, les dents (2), partant de la base du corps d'appareil (1) jusqu'au milieu environ, présentant une largeur constante ou une largeur diminuant légèrement, et la largeur des dents (2) se réduisant environ à partir du milieu et se rétrécissant en une pointe (5) à l'extrémité avant de la dent (2), **caractérisé en ce que** le contour de côté des dents (2), partant de la base jusqu'à la pointe (5), est arrondi progressivement sans coins ainsi qu'au milieu dans la partie de transition, **en ce que** la largeur des dents (2) est de 3,5 à 4,5 mm dans la partie de la base du corps d'appareil (1) jusqu'au milieu environ, **en ce que** l'écartement entre les dents (2) est de 2,5 à 3,5 mm dans la partie de la base du corps d'appareil (1) jusqu'au milieu environ, **en ce que** l'écart entre les pointes (5) des dents (2) est de 6 à 8 mm, **en ce que** la longueur des dents (2) est de 20 à 50 mm, notamment environ 35 mm, et **en ce que** l'épaisseur du corps d'appareil (1) en forme de plaque et celle des dents (2) est inférieure à 3 mm, qu'elle est notamment de 2 à 2,5 mm.

2. Appareil de jardinage selon l'une des revendications précédentes, **caractérisé en ce que** la hauteur du corps d'appareil (1), y compris les dents, est de 65 à 80 mm.

3. Appareil de jardinage selon l'une des revendications précédentes, **caractérisé en ce que** la largeur du corps d'appareil (1) est de 75 à 200 mm, notamment de 120 à 140 mm.

4. Appareil de jardinage selon l'une des revendications précédentes, **caractérisé en ce que** les dents (2) présentent une surface de lame polie, notamment au dos.

5. Appareil de jardinage selon l'une des revendications précédentes, **caractérisé en ce que** le corps d'appareil (1) en forme de plaque comprend un angle d'environ 60° par rapport à l'axe du manche.

6. Appareil de jardinage selon l'une des revendications précédentes, **caractérisé en ce qu**'un second corps d'appareil (1') est placé sur le corps d'appareil (1), ce second corps étant dirigé avec ses dents (2') à l'opposé de la disposition des dents (2) du premier corps d'appareil (1).

7. Appareil de jardinage selon la revendication 6, **caractérisé en ce que** le second corps d'appareil (1') présente de deux à cinq dents (2'), notamment trois dents (2').

8. Appareil de jardinage selon la revendication 6 ou 7, **caractérisé en ce que** l'écart entre les pointes (5) des dents (2) du second corps d'appareil (1') est de 7,5 à 12,5 mm, notamment de 10 mm environ.

9. Appareil de jardinage selon l'une des revendications 6 à 8, **caractérisé en ce que** l'écart entre les dents (2') est de 2,5 à 3,5 mm au milieu, notamment de 3 mm environ.

10. Appareil de jardinage selon l'une des revendications 6 à 9, **caractérisé en ce que** les dents (2') du second corps d'appareil (1') présentent une longueur de 20 à 50 mm, notamment de 35 mm environ.

11. Appareil de jardinage selon l'une des revendications 6 à 10, **caractérisé en ce que** les niveaux des deux corps d'appareil en forme de plaque (1, 1') forment entre eux un angle obtus d'environ 120°.
